# EUROPÄISCHE PATENTSCHRIFT

(11) **EP 3 727 940 B1**
(45) Veröffentlichungstag und Bekanntmachung des Hinweises auf die Patenterteilung: **27.04.2022**
(21) Anmeldenummer: 18815123.7
(22) Anmeldetag: 27.11.2018
(51) Int. Cl.: B60R 11/04

(54) **KAMERA-ARM EINES KAMERABASIERTEN SPIEGELERSATZ-SYSTEMS FÜR EIN KRAFTFAHRZEUG**
CAMERA ARM OF A CAMERA-BASED MIRROR SUBSTITUTE SYSTEM FOR A MOTOR VEHICLE
BRAS DE CAMÉRA D'UN SYSTÈME RÉTROVISEUR DE SUBSTITUTION UTILISANT UNE CAMÉRA POUR UN VÉHICULE AUTOMOBILE

(30) Priorität: 22.12.2017 DE 102017223732; 17.04.2018 DE 102018205849
(43) Veröffentlichungstag der Anmeldung: 28.10.2020
(73) Patentinhaber: Continental Automotive GmbH, 30165 Hannover (DE)
(72) Erfinder: MIETHIG, Werner, 81737 München (DE)
(74) Vertreter: Continental Corporation
(86) Internationale Anmeldenummer: PCT/EP2018/082746
(87) Internationale Veröffentlichungsnummer: WO 2019/120903

(56) Entgegenhaltungen:
- EP-A1- 2 955 065
- US-A1- 2014 063 245
- US-A1- 2016 065 796
- US-A1- 2016 243 988

## Beschreibung

Die Erfindung betrifft einen Kamera-Arm eines kamerabasierten Spiegelersatz-Systems für ein Kraftfahrzeug aufweisend ein erstes Strukturelement, ein zweites Strukturelement und ein volumenveränderliches Fluidgefäß, welches das erste Strukturelement und das zweite Strukturelement miteinander verbindet, wobei das zweite Strukturelement relativ zum ersten Strukturelement bewegbar ist, indem die in dem Fluidgefäß befindliche Fluidmenge verändert wird.

Rückspiegel, welche einem Führer eines Kraftfahrzeugs Sicht nach hinten gewähren, sind bei Kraftfahrzeugen allgegenwärtig und gesetzlich vorgeschrieben. Künftig sollen die üblichen Rückspiegel durch Kamera-Monitor-Systeme ersetzt werden. Hierbei wird Sicht nach hinten gewährt, indem von Kameras aufgenommene Bilder einem Führer eines Kraftfahrzeugs auf Monitoren angezeigt werden. Es ist zweckmäßig für derartige kamerabasierte Spiegelersatzsysteme für Nutzfahrzeuge, die Kameras nicht direkt an der Fahrzeugkarosserie anzubringen, sondern sie davon zu beabstanden: Bekannte Rückspiegel weisen einen gewissen Abstand zur Fahrzeugkarosserie auf. Dadurch wird beispielsweise ein günstiger Sichtbereich gewährt. Dabei sind Abstände von Spiegel und Karosserie in der Größenordnung von 5 cm bis einigen zehn Zentimetern üblich, beispielsweise 80 cm für einen besonders weiten Sichtbereich bei stark ausscherenden Fahrzeuggespannen, Schwertransportern, landwirtschaftlichen Maschinen, Bergbaufahrzeugen und - Gerät. Für eine Anordnung von Kameras kamerabasierte Spiegelersatzsystemen an Fahrzeugen, insbesondere als Ersatz für Außenspiegel oder Seitenspiegel, ist es daher erwünscht, die Kameras auch von der Karossiere beabstandet anzuordnen. Dazu können Kamera-Arme verwendet werden, welche beispielsweise an Fahrzeugkabinen angebracht werden können.

Starre Anordnungen von Kameras bieten der mechanischen Gestaltung, den Kameras und weiteren, mit den Kameras an den Kamera-Armen angeordneten Modulen, Elementen und Vorrichtungen keinen ausreichenden Schutz gegen schädliche äußere Einwirkungen wie Kräfte von allen Seiten, Stoßbelastungen und Schockbelastungen. Starre Befestigungen sind den potentiellen Schadwirkungen von mechanischer Krafteinwirkung gegenüber empfindlich.

Aus der gattungsbildenden EP 2 955 065 A1 ist ein Fahrzeug mit einem Kamera-Monitor-System als Spiegelersatzsystem bekannt. Dabei kann eine Linear-Stelleinrichtung vorgesehen sein, mit der eine Kamera in verschiedene Abstandspositionen bezüglich des Fahrzeugs verlagerbar ist. Die Kamera kann mittels der Linear-Stelleinrichtung bezüglich des Fahrzeugs elektrisch und/oder hydraulisch und/oder pneumatisch aus- und einfahrbar sein.

Eine Aufgabe der vorliegenden Erfindung ist daher, eine Befestigung für Kameras von Kamera-Monitor-Systemen zum Spiegelersatz bei Kraftfahrzeugen (in Form eines Kamera-Arms) zu schaffen, die einen verbesserten Schutz vor äußeren schädlichen Einwirkungen auf die Befestigung bzw. den Kamera-Arm und auf alle daran angeordneten Elemente, Vorrichtungen und Module, insbesondere Kameras, bietet und die einen optimalen Bildbereich der Kameras ermöglicht.

Diese Aufgabe wird durch den Kamera-Arm gemäß Anspruch 1 gelöst.

Ausgestaltungen und Weiterbildungen des Erfindungsgedankens sind Gegenstand von abhängigen Ansprüchen.

Der hier vorgeschlagene Kamera-Arm eines kamerabasierten Spiegelersatz-Systems für ein Kraftfahrzeug weist ein erstes Strukturelement zur Verbindung des Kamera-Arms mit einem Kraftfahrzeug und ein zweites Strukturelement, welches zumindest eine Kamera aufweist, ein volumenveränderliches Fluidgefäß, welches das erste Strukturelement und das zweite Strukturelement direkt oder über ein oder mehrere Vermittlungselemente miteinander verbindet, und zumindest ein Rückstellelement, welches das erste Strukturelement und das zweite Strukturelement direkt oder über ein oder mehrere Vermittlungselemente miteinander verbindet und das zweite Strukturelement in Richtung des ersten Strukturelements zieht, auf. Dabei ist das zweite Strukturelement relativ zum ersten Strukturelement bewegbar, indem die in dem Fluidgefäß befindliche Fluidmenge verändert wird.

Besondere Ausführungsformen sind Gegenstand der Unteransprüche.

Das volumenveränderliche Fluidgefäß dehnt sich bei Erhöhung der Fluidmenge im Fluidgefäß aus und das volumenveränderliche Fluidgefäß schrumpft bei Verringerung der Fluidmenge im volumenveränderlichen Fluidgefäß.

Das zweite Strukturelement nimmt eine maximal von dem ersten Strukturelement entfernte Position ein, wenn das Fluidgefäß des Kamera-Arms mit dem Arbeitsfluid geflutet ist, d.h. den maximalen oder beinahe den maximalen Füllstand, beispielsweise mehr als 95% oder mehr als 99% der Füllmenge aufweist.

Das zweite Strukturelement nimmt eine minimal vom ersten Strukturelement entfernte Position ein, wenn das Fluidgefäß weniger als eine vorbestimmte Mindestmenge Fluid enthält, weil bei einem niedrigen Füllstand des Fluidgefäßes das Rückstellelement eine Kraft entgegen einer Ausdehnung des Fluidgefäßes auswirkt, sodass beim Ausströmen des Fluids aus dem Fluidgefäß das zweite Strukturelement zu der Position des geringsten Abstands vom ersten Fluidelement bewegt wird.

Bei einer besonders vorteilhaften Ausführungsform eines hier vorgeschlagenen Kamera-Arms ist das volumenveränderliche Fluidgefäß dadurch zur Beherbergung eines variablen Volumens geeignet, dass das Fluidgefäß einen teleskopartigen Ausdehnungsbereich aufweist. Beispielsweise kann ein Teil des Fluidgefäß als zylindrischer, teleskopartiger Bereich gestaltet sein, d.h. mit konzentrischen, ineinandergreifenden Zylindermantel-Elementen, die ineinander greifen.

Bei einer besonders vorteilhaften Ausführungsform weist das Fluidgefäß zumindest in Teilbereichen eine elastische Wandung auf. In dieser Ausführungsform ist das volumenveränderliche Fluidgefäß also dehnbar.

Die Ausdrücke Bildbereich, Sichtbereich, Sichtfeld und Blickfeld sind synonym zu verstehen: Ein Sichtbereich einer Kamera stellt den Bereich dar, den eine Kamera "sieht". Diesen Bereich gibt sie in Form eines Bildes weiter. Demnach ergibt sich aus dem Sichtbereich der Bildbereich. Der Sichtbereich dieser Kamera entspricht aber auch dem Sichtfeld. Blickfeld ist ohnehin ein Synonym für Blickfeld. Unter Blickwinkel kann ein Winkel verstanden werden, der ein Blickfeld definiert. Blickwinkel ist auch ein Synonym für Perspektive.

Bei dem erfindungsgemäßen Kamera-Arm weist das Fluidgefäß einen Rollbalg auf oder ist im Wesentlichen als Rollbalg ausgeführt. Dadurch ergibt sich besonders vorteilhaft eine kompakte, robuste Beschaffenheit eines derartigen Kamera-Arms.

Bei einer weiteren besonders vorteilhaften Ausführungsform eines hier vorgeschlagenen Kamera-Arms mit einem einen Rollbalg aufweisenden volumenveränderlichen Fluidgefäß oder mit einem im Wesentlichen als Rollbalg ausgeführten volumenveränderlichen Fluidgefäß besteht der Rollbalg aus einem Elastomer-Material. Dadurch ergibt sich besonders vorteilhaft ein gegenüber Umgebungseinflüssen besonders beständiger Kamera-Arm.

Bei einer weiteren besonders vorteilhaften Ausführungsform eines hier vorgeschlagenen Kamera-Arms sind das oder die Rückstellelemente als Federn gestaltet. Der Vorteil bei der Verwendung von Federn als Rückstellelementen ist die breite Verfügbarkeit und geringe Kosten.

Bei einer weiteren besonders vorteilhaften Ausführungsform eines hier vorgeschlagenen Kamera-Arms mit als Feder gestaltetem Rückstellelement oder mit als Federn gestalteten Rückstellelementen sind das oder die Rückstellelemente als Spiralfedern ausgeführt. Spiralfedern als Rückstellelemente bringen besonders vorteilhaft ihre lineare Federkonstante über einen gut wählbaren Arbeitsbereich hinweg mit.

Bei einer weiteren besonders vorteilhaften Ausführungsform eines hier vorgeschlagenen Kamera-Arms ist das volumenveränderliche Fluidgefäß für die Verwendung von Pressluft als Fluid ausgelegt. Ein besonderer Vorteil bei der Verwendung von Pressluft als Fluid liegt darin, dass zum einen ein Nachfüllen des Fluids entfallen kann, da Pressluft praktisch überall gewonnen werden kann. Zum anderen ist Pressluft als Fluid besonders vorteilhaft, da Fahrzeuge häufig ohnehin mit Pressluft-Infrastruktur ausgerüstet sind. Das betrifft insbesondere Nutzfahrzeuge wie Lastkraftwagen und landwirtschaftliche Fahrzeuge aber auch Fahrzeuge im Bergbau. Zudem ist gerade bei Lastkraftwagen häufig ein Signalhorn auf dem Kabinendach - und somit in der Nähe von konventionellen Spiegeln, also auch in der Nähe des Einsatzortes von Spiegelersatzsystemen.

Bei einer weiteren besonders vorteilhaften Ausführungsform eines hier vorgeschlagenen Kamera-Arms ist das volumenveränderliche Fluidgefäß doppelwandig ausgeführt. Eine doppelwandige Ausführung kann besonders vorteilhaft entweder besonders robust geartet sein oder andererseits ermöglichen, dass nur zwischen den beiden Wänden des doppelwandigen Gefäßes das Arbeitsfluid befindlich ist und somit ein fluidfreier Innenraum des Gefäßes geschaffen wird.

Bei einer weiteren besonders vorteilhaften Ausführungsform eines hier vorgeschlagenen Kamera-Arms mit doppelwandig ausgeführtem volumenveränderlichen Fluidgefäß ist das Fluidgefäß so gestaltet, dass das Fluid in dem gefülltem Fluidgefäß die Form eines Zylindermantels einnimmt. Eine Beschaffenheit des Fluidgefäßes derart, dass im gefüllten Zustand das Fluid insgesamt die Form eines Zylindermantels einnimmt ist besonders vorteilhaft darin, dass ein Zylindermantel mit seiner Form wie ein Rohr besonders gute mechanische Steifigkeit aufweist. Das Fluid und dessen Druck halten das Fluidgefäß im gefüllten Zustand in Form. Diese Formgebung ist besonders effizient.

Eine Ausführungsform eines hier vorgeschlagenen Kamera-Arms weist mehr als eine Kamera auf. Dadurch ergibt sich einerseits, wenn ein einzelnes Blickfeld abgedeckt werden soll, dadurch der besondere Vorteil, dass zusätzliche Informationen, beispielsweise Tiefeninformationen, über die Bildinhalte gewonnen werden können. Andererseits können dabei besonders vorteilhaft Kameras mit unterschiedlichen Bilderfassungseigenschaften kombiniert werden; beispielsweise eine Kamera mit Tele-Eigenschaften und eine Kamera mit Weitwinkel-Eigenschaften.

Bei einer Ausführungsform eines hier vorgeschlagenen Kamera-Arms decken die zumindest zwei Kameras zumindest zwei verschiedene Blickfelder ab. Dadurch ergibt sich einerseits besonders vorteilhaft, dass unterschiedliche Blickwinkel von einem einzelnen Kamera-Arm aus mit Kameras abgedeckt werden können. Andererseits können dabei besonders vorteilhaft Kameras mit unterschiedlichen Bilderfassungseigenschaften kombiniert werden; beispielsweise eine Kamera mit Tele-Eigenschaften für einen schmalen Bildbereich, der in die Ferne, eventuell bis zum Horizont, reicht, und eine Kamera mit Weitwinkel-Eigenschaften für einen breiten Bildbereich.

Bei einer Ausführungsform eines hier vorgeschlagenen Kamera-Arms, welcher mehr als eine Kamera aufweist, und bei welchem die zumindest zwei Kameras zumindest zwei verschiedene Bildbereiche oder zumindest teilweise denselben Bildbereich abdecken, weist das zweite Strukturelement die zumindest zwei Kameras auf. Dadurch ergibt sich besonders vorteilhaft einerseits eine besonders weit vom Fahrzeug beabstandete Anordnung der Kameras. Andererseits ergibt sich dadurch zudem besonders vorteilhaft, dass durch den Austausch des zweiten Strukturelements, beispielsweise bei Wartungs- oder Instandsetzungsarbeiten, in einem Zug die zumindest zwei Kameras auf einmal ausgetauscht werden.

Bei einer Ausführungsform eines hier vorgeschlagenen Kamera-Arms, welcher mehr als eine Kamera aufweist, und bei welchem die zumindest zwei Kameras zumindest zwei verschiedene Blickfelder oder zumindest teilweise dasselbe Blickfeld abdecken, weist das erste Strukturelement zumindest eine Kamera auf und das zweite Strukturelement weist zumindest eine Kamera auf. Dadurch ergibt sich der besondere Vorteil, dass stärker voneinander abweichende Bildbereiche mit den zumindest zwei Kameras abzudecken ermöglicht wird.

Bei einer Ausführungsform eines hier vorgeschlagenen Kamera-Arms weist das zweite Strukturelement zusätzlich zumindest einen Spiegel auf. Dadurch wird besonders vorteilhaft ermöglicht, beispielsweise bei Auftreten eines Problems betreffend die elektrische Versorgung des Spiegelersatz-Systems oder anderen Fehlfunktionen, den Spiegel im Notfall zur Gewährleistung der Sicht zu verwenden.

Eine Ausführungsform eines hier vorgeschlagenen Kamera-Arms weist zusätzlich Sensoren auf. Dadurch ergibt sich besonders vorteilhaft, dass diese Sensoren auch an sonst nicht zugänglichen Positionen am Fahrzeug angeordnet werden können, da ein Kamera-Arm über das Fahrzeug selbst herausragt. Weiterhin können die eingesetzten Sensoren beispielsweise besonders vorteilhaft eine verbesserte oder erweiterte Funktionalität des damit ausgerüsteten Kamera-Arms ermöglichen, beispielsweise indem Abstandssensoren, beispielsweise Ultraschallsensoren, in einem derartigen Arm angeordnet werden und diesen bei Detektion eines potentiell kollidierenden Hindernisses mittels eines Steuergeräts einklappen lässt. Solche Abstandswarner können beispielsweise in der Art von als Einparkhilfe bei PKW eingesetzten Ultraschall-Abstandswarner beschaffen sein.

Bevorzugt weist das zweite Strukturelement den oder die zusätzlichen Sensoren auf.

Eine Ausführungsform eines hier vorgeschlagenen Kamera-Arms weist zusätzlich Kommunikationseinrichtungen auf. Dadurch kann besonders vorteilhaft ermöglicht werden, einen derartig ausgerüsteten Kamera-Arm für Kommunikation zu nutzen. Kommunikationseinrichtungen in diesem Zusammenhang können beispielsweise Lampen, Leuchten, Leuchtanzeigen und/oder Lautsprecher und/oder Mikrofone sein.

Bevorzugt weist das zweite Strukturelement die Kommunikationseinrichtungen auf.

Eine Ausführungsform eines hier vorgeschlagenen Kamera-Arms weist zusätzlich eine oder mehrere der folgenden Vorrichtungen auf: Eine Funkantenne zur Kommunikation, eine Positionsleuchte, ein Heizelement, eine Reinigungsvorrichtung zur Reinigung von Kameralinsen oder Kamera-Abdeckungen. Durch die Anordnung zusätzlicher Vorrichtungen am Kamera-Arm ergeben sich, je nach den Gegebenheiten der Vorrichtungen, vielfältige Vorteile. Beispielsweise kann eine Anordnung einer Funkantenne besonders vorteilhaft verbesserte Empfangs- und Sendeeigenschaften für die Antenne ermöglichen. Heizelemente können besonders vorteilhaft für Eisfreiheit oder gegen Wasseransammlung an Kameras oder Kamera-Armen sorgen. Reinigungsvorrichtungen zur Reinigung von Kameralinsen oder Kamera-Abdeckungen können besonders vorteilhaft den Betrieb der Kameras verbessern. Positionsleuchten können besonders vorteilhaft am Kamera-Arm angeordnet sein, um dadurch besonders vorteilhaft Aufmerksamkeit auf die durch den Kamera-Arm eingenommene Position zu lenken.

Bevorzugt weist das zweite Strukturelement die zusätzlichen Vorrichtungen wie Funkantenne, Positionsleuchte, Heizelemente etc. auf.

Die Funkantenne kann beispielsweise für digitale Kommunikation genutzt werden, beispielsweise für Fahrzeug-zu-Fahrzeug - Kommunikation oder Fahrzeug-zu-Infrastruktur - Kommunikation oder für Mobilfunk oder Wireless Local-Area-Network Verbindungen oder für DSRC oder für NFC oder für Mobilfunk (Beispielsweise für GSM, UMTS, LTE, 2G, 3G, 4G, 5G, LTE light, 2.5G etc.) oder zum Empfang von GNSS-Signalen und Signalen ähnlicher Systeme (z.B. Galileo, GPS, Glonass, Beidou, QZSS, GAGAN, etc.) oder für digitalen Radioempfang DAB. Durch die Integration einer Antenne in einen Kamera-Arm ergibt sich der besondere Vorteil eines verbesserten Empfangs.

Es kann sich bei einer Funkantenne zur Kommunikation auch um eine Antenne zur Kommunikation mit Infrastruktur oder mit anderen Fahrzeugen handeln, z.B. über WIMAX, WIFI, NFC oder Bluetooth.

Die Erfindung wird nachfolgend anhand der Figuren der Zeichnung näher erläutert, wobei gleiche oder ähnliche Elemente mit denselben Bezugszeichen versehen sind. Es zeigt:
Figur 1 in einer Schnittzeichnung eine beispielhafte Ausführung eines erfindungsgemäßen Kamera-Arms 100 in einem ersten Betriebszustand,
Figur 2 in einer Schnittzeichnung dieselbe beispielhafte Ausführung eines erfindungsgemäßen Kamera-Arms 100 wie in Figur 1, jedoch in einem (von dem ersten Betriebszustand verschiedenen) zweiten Betriebszustand.
Figur 3 in einer Schnittzeichnung eine beispielhafte Ausführung eines erfindungsgemäßen Kamera-Arms 100 in einem ersten Betriebszustand,
Figur 4 in einer Schnittzeichnung dieselbe beispielhafte Ausführung eines erfindungsgemäßen Kamera-Arms 100 wie in Figur 3, jedoch in einem (von dem ersten Betriebszustand verschiedenen) zweiten Betriebszustand.

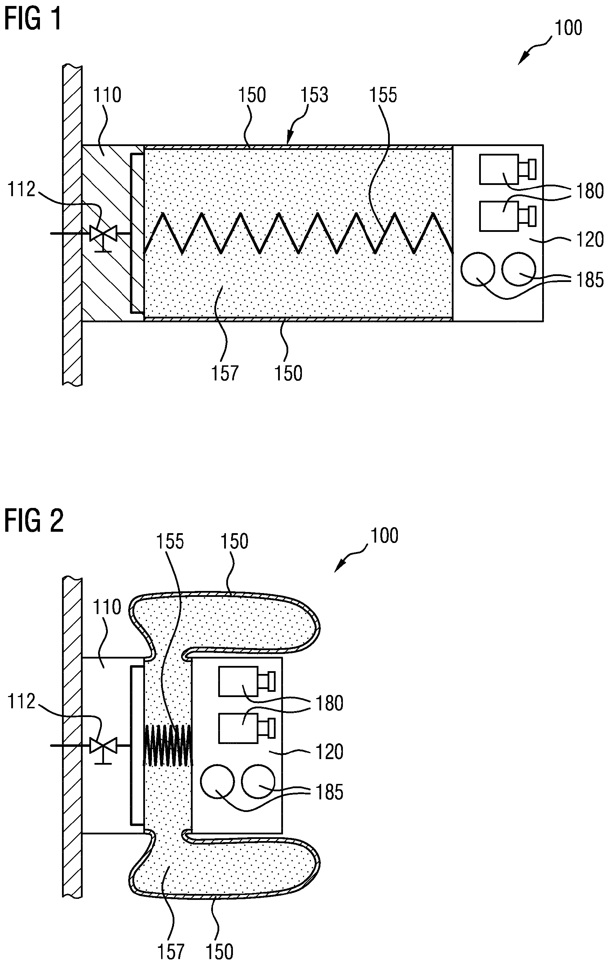

Figur 1 zeigt einen erfindungsgemäßen Kamera-Arm 100 in einem ersten Betriebszustand, bei dem der Kamera-Arm sich in ausgefahrener Stellung, d.h. in Betriebsstellung beispielsweise für den Fahrbetrieb eines Kraftfahrzeugs, an dem der Kamera-Arm 100 angeordnet sein kann, befindet. Hierbei ist das volumenveränderliche Fluidgefäß 150 mit dem Fluid 157 gefüllt und das zweite Strukturelement 120 des Kamera-Arms 100 hat die maximale Entfernung von dem ersten Strukturelement 110 eingenommen. An dem zweiten Strukturelement 120 sind in der gezeigten Darstellung zumindest zwei Kameras 180 und zwei zusätzliche Sensoren 185 angeordnet. Das Rückstellelement 155 ist hier stark ausgedehnt und als Feder, beispielsweise als Spiralfeder, gestaltet. Im ersten Strukturelement 110 ist ein Fluidventil 112 angeordnet, welches bei der Veränderung der Menge des Fluids 157 im Fluidgefäß 150 verwendet wird. In dem gezeigten Ausführungsbeispiel können die Wände des volumenveränderlichen Fluidgefäßes 150 aus einem dehnbaren Material, beispielsweise einem Elastomer-Material beschaffen sein. Hierdurch ergibt sich eine geringe Flexibilität des Kamera-Arms 100 auch ohne Variation der Menge des Fluids 157 und dadurch eine gesteigerte Robustheit. Der in Figur 1 gezeigte Kamera-Arm weist ein Fluidgefäß 150 mit Rollbalg 153 auf.

Wird das Wandungsmaterial des Fluidgefäßes 150 beschädigt und tritt das Fluid 157 aus, so zieht das Rückstellelement 155 das zweite Strukturelement 120 des Kamera-Arms 100 hin zum ersten Strukturelement 110 des Kamera-Arms, welches fest mit einem Fahrzeug, beispielsweise mit einer Kabine, verbunden sein kann. Somit nimmt der Kamera-Arm 100 in diesem Fall einen Betriebszustand mit eingezogenem Arm ein, welchen man auch als Schutzzustand bezeichnen kann. Dieser Zustand kann aber auch durch Veränderung der Menge des Fluids 157 erreicht werden, ohne, dass eine Beschädigung des Fluidgefäßes 150 vorliegt.

Figur 2 zeigt einen solchen Zustand, in dem der Kamera-Arm 100 eingefahren ist, d.h. das zweite Strukturelement 120 sich so dicht wie möglich am ersten Strukturelement 110 des Kamera-Arms 100 befindet. Figur 2 lässt offen, ob die gezeigte Situation absichtlich oder durch eine Beschädigung am Fluidgefäß 150 entstanden ist. In beiden Fällen ist gleichermaßen die Menge des Fluids 157 im Fluidgefäß 150 auf einem minimalen Stand. In dieser Situation ist das Rückstellelement 155 komplett zusammengezogen: Es hat das zweite Strukturelement 120 an das erste Strukturelement 110 herangerückt.

Die Figuren 1 und 2 zeigen denselben Kamera-Arm, wobei Figur 1 den ausgefahrenen Zustand, den Betriebszustand, zeigt. Figur 2 zeigt dagegen den Schutzzustand, den eingefahrenen Zustand des Kamera-Arms.

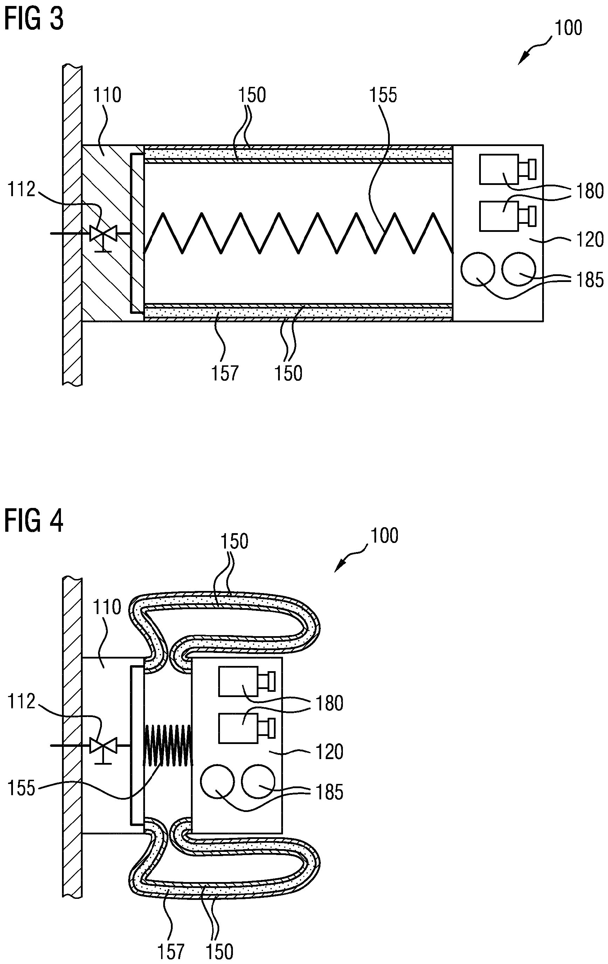

Analog zeigen die Figuren 3 und 4 denselben Kamera-Arm einmal im Betriebszustand (Figur 3) und einmal im Schutzzustand (Figur 4) . Der Kamera-Arm aus den Figuren 3 und 4 unterscheidet sich darin von dem in den Figuren 1 und 2 gezeigten Kamera-Arm 100, dass er doppelwandig ist. In der gezeigten Ausführungsform ist das Fluidgefäß 150 so gestaltet, dass in dessen gefülltem Zustand das Fluid insgesamt die Form eines Zylindermantels aufweist.

## Patentansprüche

1. Kamera-Arm (100) eines kamerabasierten Spiegelersatz-Systems für ein Kraftfahrzeug aufweisend ein erstes Strukturelement (110) zur Verbindung des Kamera-Arms (100) mit einem Kraftfahrzeug und ein zweites Strukturelement (120), welches zumindest eine Kamera (180) aufweist, wobei der Kamera-Arm (100) weiterhin ein volumenveränderliches Fluidgefäß (150), welches das erste Strukturelement (110) und das zweite Strukturelement (120) direkt oder über ein oder mehrere Vermittlungselemente miteinander verbindet, derart aufweist, dass das zweite Strukturelement (120) relativ zum ersten Strukturelement (110) bewegbar ist, indem die in dem Fluidgefäß (150) befindliche Fluidmenge verändert wird,
**dadurch gekennzeichnet, dass** der Kamera-Arm (100) weiterhin zumindest ein Rückstellelement (155), welches das erste Strukturelement (110) und das zweite Strukturelement (120) direkt oder über ein oder mehrere Vermittlungselemente miteinander verbindet und das zweite Strukturelement (120) in Richtung des ersten Strukturelements (110) zieht, aufweist und dass, das Fluidgefäß einen Rollbalg (153) aufweist oder im Wesentlichen als Rollbalg ausgeführt ist.

2. Kamera-Arm (100) nach Anspruch 1, wobei der Rollbalg (153) aus einem Elastomer-Material besteht.

3. Kamera-Arm (100) nach einem der vorangehenden Ansprüche,
wobei das oder die Rückstellelemente (155) als Federn gestaltet sind.

4. Kamera-Arm (100) nach Anspruch 3, wobei das oder die Rückstellelemente (155) als Spiralfedern ausgeführt sind.

5. Kamera-Arm (100) nach einem der vorangehenden Ansprüche, welcher für eine Verwendung von Pressluft als Fluid (157) im Fluidgefäß (150) ausgelegt ist.

6. Kamera-Arm (100) nach einem der vorangehenden Ansprüche, wobei das Fluidgefäß (150) doppelwandig ausgeführt ist.

7. Kamera-Arm (100) nach Anspruch 6, wobei das Fluidgefäß (150) so gestaltet ist, dass das Fluid (157) in dem gefülltem Fluidgefäß (150) die Form eines Zylindermantels einnimmt.

## Claims

1. Camera arm (100) of a camera-based mirror substitute system for a motor vehicle, comprising a first structural element (110) for connecting the camera arm (100) to a motor vehicle and a second structural element (120), which comprises at least one camera (180), wherein the camera arm (100) furthermore comprises a variable-volume fluid vessel (150), which connects the first structural element (110) and the second structural element (120) to one another directly or by way of one or more intermediary elements, in such a way that the second structural element (120) can be moved relative to the first structural element (110) by virtue of the amount of fluid located in the fluid vessel (150) being changed, **characterized in that** the camera arm (100) furthermore comprises at least one restoring element (155), which connects the first structural element (110) and the second structural element (120) to one another directly or by way of one or more intermediary elements and pulls the second structural element (120) in the direction of the first structural element (110), and **in that** the fluid vessel comprises a rolling bellows (153) or is embodied substantially in the form of a rolling bellows.

2. Camera arm (100) according to Claim 1, wherein the rolling bellows (153) is composed of an elastomer material.

3. Camera arm (100) according to either of the preceding claims, wherein the restoring element or elements (155) are designed in the form of springs.

4. Camera arm (100) according to Claim 3, wherein the restoring element or elements (155) are embodied in the form of spiral springs.

5. Camera arm (100) according to one of the preceding claims, which is designed for the use of compressed air as fluid (157) in the fluid vessel (150).

6. Camera arm (100) according to one of the preceding claims, wherein the fluid vessel (150) is of double-walled embodiment.

7. Camera arm (100) according to Claim 6, wherein the fluid vessel (150) is designed such that the fluid (157) in the filled fluid vessel (150) assumes the shape of a cylinder jacket.

## Revendications

1. Bras de caméra (100) d'un système de remplacement de rétroviseur à base de caméra destiné à un véhicule automobile comportant un premier élément structurel (110) destiné à relier le bras de caméra (100) à un véhicule automobile et un deuxième élément structurel (120) qui comporte au moins une caméra (180), le bras de caméra (100) comportant en outre un récipient à fluide (150) à volume variable qui relie le premier élément structurel (110) et le deuxième élément structurel (120) l'un à l'autre directement ou par le biais d'un ou de plusieurs éléments de transmission de manière à ce que le deuxième élément structurel (120) puisse être déplacé par rapport au premier élément structurel (110) par modification de la quantité de fluide dans le récipient à fluide (150), **caractérisé en ce que** le bras de caméra (100) comporte en outre au moins un élément de rappel (155) que relie le premier élément structurel (110) et le deuxième élément structurel (120) l'un à l'autre directement ou par le biais d'un ou de plusieurs éléments de transmission et qui tire le deuxième élément structurel (120) en direction du premier élément structurel (110), et **en ce que** le récipient à fluide comporte un soufflet roulant (153) ou est réalisé sensiblement sous la forme d'un soufflet roulant.

2. Bras de caméra (100) selon la revendication 1, le soufflet roulant (153) étant en un matériau élastomère.

3. Bras de caméra (100) selon l'une des revendications précédentes, le ou les éléments de rappel (155) étant réalisés sous la forme de ressorts.

4. Bras de caméra (100) selon la revendication 3, le ou les éléments de rappel (155) étant réalisés sous la forme de ressorts hélicoïdaux.

5. Bras de caméra (100) selon l'une des revendications précédentes, qui est conçu pour utiliser de l'air comprimé comme fluide (157) dans le récipient à fluide (150).

6. Bras de caméra (100) selon l'une des revendications précédentes, le récipient à fluide (150) étant à double paroi.

7. Bras de caméra (100) selon la revendication 6, le récipient à fluide (150) étant conçu de sorte que le fluide (157) dans le récipient à fluide rempli (150) prend la forme d'une enveloppe cylindrique.
